Europäisches Patentamt

(19) European Patent Office     (11) Numéro de publication: **0 091 388**
Office européen des brevets                              **B1**

(12)          **FASCICULE DE BREVET EUROPEEN**

(45) Date de publication du fascicule du brevet:     (51) Int. Cl.⁴: **F 24 H 9/12, F 16 K 35/00**
11.06.86

(21) Numéro de dépôt: **83420060.2**

(22) Date de dépôt: **30.03.83**

(54) Appareil comportant un organe de réglage muni d'un système d'inviolabilité.

(30) Priorité: **02.04.82 FR 8205904**              (73) Titulaire: **DESBORDES, Société Anonyme, 56, rue Masséna, F-69006 Lyon (FR)**

(43) Date de publication de la demande:
**12.10.83 Bulletin 83/41**                       (72) Inventeur: **Cocherel, Michel, 117, rue Garibaldi, F-69006 Lyon (FR)**

(45) Mention de la délivrance du brevet:
**11.06.86 Bulletin 86/24**                       (74) Mandataire: **Karmin, Roger et al, Cabinet MONNIER 150, cours Lafayette, F-69003 Lyon (FR)**

(84) Etats contractants désignés:
**AT BE CH DE GB IT LI LU NL SE**

(56) Documents cités:
**FR - A - 324 836**
**GB - A - 321 880**
**US - A - 1 574 522**
**US - A - 2 041 421**

LIBER, STOCKHOLM 1986

## Description

La présente invention se réfère aux moyens de rendre inviolable l'accès à l'organe de réglage d'un appareil.

Généralement, ce moyen est constitué par un plombage, c'est-à-dire qu'il consiste en un cordon métallique traversant une partie fixe de l'appareil et l'organe de réglage et dont les deux extrémités sont réunies par un sceau. Dans d'autres cas, le réglage se trouve au fond d'une perforation dont le débouché vers l'extérieur est fermé par une coulée de matière dans laquelle on peut imprimer une empreinte particulière, par exemple au moyen d'un poiçon.

On conçoit aisément qu'un plombage de ce genre peut être facilement détruit volontairement ou par l'oxydation naturelle, de telle sorte que des personnes non autorisées peuvent avoir accès relativement facilement au réglage ou à l'organe protégés.

On a aussi prévu, par exemple dans le document GB-A-321 880, de disposer une rondelle de sécurité bombée dans une gorge située au debouche de l'alésage d'un appareil dans lequel se trouve un organe de réglage. Une telle rondelle est tout à fait visible et l'on détermine immédiatement la manière de l'extraire en vue d'avoir accès à l'organe de réglage.

Dans le brevet US-A-1 574 522 on montre un bouchon à clef qui actionne des pênes retenant ledit bouchon par rapport à une cloison annulaire ménagée dans un alésage donnant accès à un organe de réglage. Là encore, l'on détermine immédiatement la structure qui barre l'accès à l'organe de réglage. De plus, un tel système ne peut être logé profondément à l'intérieur de l'appareil. En outre, le système à clef comporte une section relativement importante qui exclut qu'on puisse l'utiliser pour des appareils de petites dimensions. Enfin, le prix du système d'inviolabilité suivant le brevet américain considéré est évidemment élevé du fait de sa complexité.

Les perfectionnements qui font l'objet de la présente invention visent à remédier aux inconvénients des systèmes d'inviolabilité connus et à permettre la réalisation d'un tel système susceptible de réaliser à la fois un scellé et un verrou.

L'appareil suivant l'invention, comporte un organe de réglage muni d'un système d'inviolabilité destiné à protéger ledit l'organe de reglage contre toute action non autorisée, ledit appareil comprenant au-dessus et dans l'axe vertical de l'organe de réglage et dans l'ordre en partant dudit organe:

- un alésage dans lequel se trouve ledit organe;
- un chambrage de diamètre superieur à celui de l'alésage;
- une perforation de diamètre supérieur à celui de l'alésage et inférieur à celui du chambrage tandis qu'un élément obturateur est réalisé sous la forme d'une pastille est caractérisé en ce que le diamètre de cette pastille correspond au jeu près à celui de la perforation et en ce qu'il est inférieur à celui du chambrage alors qu'il est supérieur à celui de l'alésage afin qu'on puisse la faire tomber par gravité dans le chambrage lorsqu'on l'introduit dans la perforation, cette pastille étant pourvue de moyens d'être saisie par un outil approprié destiné à l'extraire hors de l'appareil.

La pastille est préférablement introduite à la main et une fois qu'elle se trouve dans le chambrage elle ne peut pas en être retirée avec aucun outil usuel. Seuls des moyens appropriés comme un dispositif à mandrin expansible disposé à l'extrémité d'une tige et qui pénètrerait dans un trou de la pastille pourrait permettre son extraction à partir du chambrage. Grâce à un tel outil, cette pastille pourrait être centrée vis-à-vis de la perforation, puis déplacée à l'intérieur de celle-ci afin de l'extraire.

La pastille pourrait aussi être détruite dans le chambrage afin de libérer l'accès à l'organe de réglage. Dans ce cas elle serait réalisée en une matière appropriée telle que la céramique.

La pastille disposée dans le chambrage constitue à la fois un scellé et un verrou. Le scellé est meilleur que les plombages traditionnels car il est déroutant par sa structure même. Le verrou n'est pas à l'abri absolu de son viol par une personne non autorisée, mais cette extraction est extrêmement difficile à effectuer pour quelqu'un qui ne dispose pas à la fois de la connaissance de la méthode d'accès et d'un outillage adéquat.

Un système d'inviolabilité suivant l'invention peut être avantageusement utilisé pour garantir la non-accessibilité à l'organe de réglage d'un raccord suivant le FR-A-2 504245 de la présente Demanderesse. On rappellera qu'un tel raccord est destiné au réglage du débit du fluide circulant dans un radiateur tout en assurant une isolation des canalisations en cas de démontage de ce radiateur. Autrement dit, le système d'inviolabilité suivant l'invention est avantageusement appliqué à un raccord susceptible de remplir trois fonctions : d'abord la mesure du débit du fluide le traversant, puis le réglage de ce débit, enfin l'arrêt complet du passage du fluide sans modification du réglage.

Le dessin, annexé, donné à titre d'exemple, permettra de mieux comprendre l'invention, les caractéristiques qu'elle présente et les avantages qu'elle est susceptible de procurer :

Fig. 1 est une coupe longitudinale d'un raccord établi conformement au brevet français 81 07958 mais comportant en plus application des perfectionnements suivant la présente invention.

Fig. 2 en est une vue de détail à plus grande echelle.

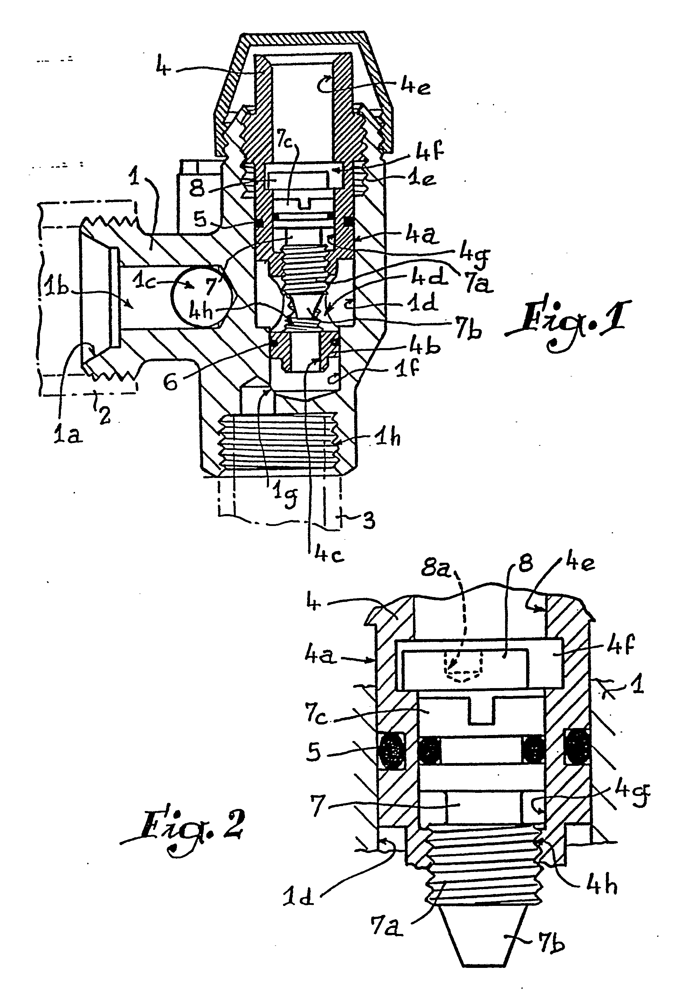

On a représenté en fig. 1 un raccord établi conformément au FR-A- 2 504 245 qui comprend un corps 1 dont l'entrée 1a se raccorde à une canalisation d'amenée 2 de manière que le fluide pénètre dans le corps 1 par une entrée 1b comportant un passage 1c dans lequel on peut mesurer le débit par pression differentielle. Le passage 1c aboutit dans un alésage vertical 1d

prévu étagé. La partie supérieure filetée de cet alésage a été référencée 1e et son diamètre est plus grand que celui de l'alésage 1d. A l'inverse le bas de ce dernier comporte une portée 1f dont le diamètre est infèrieur à celui de l'alésage précité. La portée 1f communique latéralement par un orifice 1g avec la sortie taraudée 1h du raccord à laquelle est associée une canalisation de sortie 3.

Dans le cas où le raccord illustré en fig. 1 est utilisé sur un radiateur de chauffage central à eau chaude, la canalisation de retour porte la référence 3, tandis que la canalisation 2 représente la sortie du radiateur.

Dans l'alésage 1d on a engagé une douille tubulaire verticale 4 dont une partie de la périphérie se visse dans le filetage 1e du corps. La douille 4 comporte une partie cylindrique 4a pourvue d'un joint 5 assurant l'étanchéité entre ladite partie et l'alésage 1d du corps. La douille 4 se termine par un clapet 4d destiné à fermer l'ouverture 1g lorsque la douille est complètement vissée dans la partie filetée 1e du corps. La périphérie du clapet 4b comporte un joint 6 destinè à assurer son étanchéité avec la portée 1f. Son centre comporte un perçage 4c le traversant de part en part. Juste au-dessus du clapet 4b la douille 4 comporte des ouvertures latérales 4d destinées à permettre le passage du fluide dans cette douille. A l'opposé du clapet 4 ladite douille 4 est pourvue d'une perforation 4d débouchant dans un chambrage 4f de section transversale plus importante à laquelle fait suite un alésage 4g qui se termine par un filetage 4h débouchant au niveau des ouvertures 4d. Un pointeau 7 est disposé à l'intérieur de la douille. Son filetage 7a coopère avec le taraudage 4h de la douille 4 afin que la partie terminale tronconique 7b du plateau puisse être plus ou moins approchée de l'origine du trou 4c du clapet 4b de la douille.

Le pointeau est encore pourvu d'une tête 7c dont la fente radiale permet le réglage du debit du fluide traversant le trou 4c de la douille en vissant plus ou moins ledit pointeau par rapport à son taraudage 4h.

Une fois le reqlage effectué, on désire qu'il ne puisse pas être modifiè par un tiers non autorisé.

A cet effet et conformément à l'invention on utilise un elément d'obturation tel qu'une pastille 8 dont la section correspond au jeu près à celle de la perforation 4e de telle sorte qu'elle puisse être engagée à glissement juste dans cette perforation. Lorsque la pastille arrive au bas de celle-ci, elle tombe dans l'emboîtement 4f dans lequel elle se dispose de manière aléatoire, c'est-à-dire qu'elle se trouve decentrée par rapport à la perforation 4e comme plus particulièrement illustré en fig. 2. La face supérieure de la pastille 8 constitue l'origine d'un trou borgne 8a dans lequel on peut engager un mandrin expansible situé à l'extrémité d'une tige afin de recentrer ladite pastille par rapport à la perforation 4e et de lui permettre d'être extraite du chambrage 4f par coulissement dans la perforation 4e. Bien entendu dans le cas de l'utilisation d'une pastille 8, il est préférable que la section de la sortie 4g de l'alésage de la douille 4 soit inférieure à celle de la pastille 8 afin que celle-ci ne puisse pas entrer dans cette partie 4g. Le trou 8a, pourrait être masqué par une étiquette ou autre moyen non illustré afin d'améliorer encore la sécurité.

## Revendications

1. Appareil comportant un organe de réglage muni d'un système d'inviolabilité destiné à protéger ledit organe de réglage (7) contre toute action non autorisée, ledit appareil comprenant au-dessus et dans l'axe vertical de l'organe de réglage (7) et dans l'ordre en partant dudit organe:
   - un alésage (4g) dans lequel se trouve ledit organe (7);
   - un chambrage (4f) de diamètre supérieur à celui de l'alésage (4g);
   - une perforation (4e) de diamètre supérieur à celui de l'alésage (4g) et inférieur à celui du chambrage (4f) tandis qu'un élément obturateur (8) est réalisé sous la forme d'une pastille (8), caractérisé en ce que le diamètre de cette pastille (8) correspond au jeu près à celui de la perforation (4e) en ce qu'il est inférieur à celui du chambrage (4f) alors qu'il est supérieur à celui de l'alésage (4g) afin qu'on puisse la faire tomber par gravité dans le chambrage lorsqu'on l'introduit dans la perforation (4e), cette pastille (8) étant pourvue de moyens (8a) d'être saisie par un outil approprié destiné à l'extraire hors de l'appareil.

2. Appareil suivant la revendication 1, caractérisé en ce que la pastille (8) comporte un trou borgne (8a) dans lequel viennent s'engager les pinces d'un mandrin expansible disposé au bout d'une tige afin de saisir la pastille (8) en vue de son extraction, le trou (8a) étant marqué par un moyen approprié.

3. Appareil suivant la revendication 1, caractérisé en ce que la pastille (8) est détruite dans le chambrage afin de libérer l'accès à l'organe de réglage (7).

## Patentansprüche

1. Apparat mit einem eine Schutzvorrichtung gegen willkürliche Verstellung aufweisenden Regelorgan (7), wobei der Apparat oberhalb des und in der vertikalen Achse mit dem Regelorgan (7), ausgehend von diesem der Reihe nach eine das Regelorgan (7) aufnehmende Rührungsbohrung (4g), eine Ringkammer (4f) mit einem grösseren Durchmesser als der der Führungsbohrung und eine Eingangsbohrung (4e) aufweist, deren Durchmesser grösser als der der Führungsbohrung (4g) und kleiner als der der Kammer (4f) ist, wobei ein als Scheibe (8) ausgebildetes Verschlusselement vorgesehen ist, dadurch gekennzeichnet dass der Durchmesser der Scheibe (8) mit Gleitspiel dem Durchmesser der Eingangsbohrung (4e) entspricht und geringer als der Durchmesser der Kammer (4f) jedoch grösser als der Durchmesser der Führungsbohrung (4g) ist, damit die Scheibe (8) nach Einführen in die Eingangsbohrung (4e) durch die Schwerkraft in die Kammer (4f) fällt, und dass die Scheibe mit Mitteln (8a) zum Ergreifen mittels eines geeigneten Werkzeuges versehen ist zum Zwecke ihrer Entnahme aus dem Apparat.

2. Apparat nach Anspruch 1, dadurch gekennzeichnet, dass die Scheibe (8) eine Sackbohrung (8a) aufweist, in die die Zangen eines am Ende der Stange angeordneten Spreizdornes eingreifen, um die Scheibe (8) mit dem Ziel seiner Herausnahme zu ergreifen, wobei die Sackbohrung (8a) mit einem geeigneten Kennzeichen markiert ist.

3. Apparat nach Anspruch 1, dadurch gekennzeichnet, dass die Scheibe (8) zum Zwecke der Freigabe des Zuganges zu dem Regelorgan (7) in der Kammer zerstörbar ist.

## Claims

1. Apparatus comprising regulating means provided with a protecting system intended to protect the said regulating means (7) against any unauthorised action, the said apparatus comprising above and on the vertical axis of the regulation means (79 and in order starting from the said means:
a bore (4g) in which the said means (7) are located;
- chambering (4f) of greater diameter than that of the bore (4g);
- a drilled hole (4e) of diameter greater than that of the bore (4g) and less than that of the chambering (4f) whereas a closure member (8) is provided in the form of a tablet (8), <u>characterised</u> in that the diameter of this tablet (8) corresponds apart from a clearance to that of the drilled hole (4e) in that it is less than that of the chambering (4f) whereas it is greater that that of the bore (4g) in order that it can be allowed to drop by gravity into the chambering when it is introduced into the drilled hole (4e), this tablet (8) being provided with means (8a) for being gripped by a suitable tool intended to extract it from the apparatus.

2. Apparatus according to claim 1, characterised in that the tablet (8) comprises a blind hole (8a) in which the grippers of an expandable mandrel located at the end of a rod engage in order to grip the tablet (8) for the purpose of its extraction, the hole (8a) being marked by suitable means.

3. Apparatus according to claim 1, characterised in that the tablet (8) is destroyed in the chambering in order to gain access to the regulating means (7).

0 091 388

*Fig. 1*

*Fig. 2*

1